# EUROPÄISCHE PATENTSCHRIFT

(11) **EP 1 443 741 B1**
(45) Veröffentlichungstag und Bekanntmachung des Hinweises auf die Patenterteilung: **27.09.2006**
(21) Anmeldenummer: 03016187.1
(22) Anmeldetag: 17.07.2003
(51) Int. Cl.: H04M 3/51, H04Q 3/00

(54) **WEB-basierendes Multimediales Virtuelles Call Center**
WEB-based multimedia virtual call center
Centre d'appels multimedia basé sur le WEB

(30) Priorität: 31.01.2003 DE 10303865
(43) Veröffentlichungstag der Anmeldung: 04.08.2004
(73) Patentinhaber: Deutsche Telekom AG, 53113 Bonn (DE)
(72) Erfinder: Daussmann, Frank, 67454 Hassloch (DE); Schrittwieser, Walter, Dipl.-Ing., 67731 Otterbach (DE)

(56) Entgegenhaltungen:
- EP-A- 1 274 259
- DE-A- 10 046 320
- US-A- 5 825 870
- US-A- 5 960 073
- US-A1- 2001 038 623

## Beschreibung

Die Erfindung betrifft ein virtuelles Call Center und ein Verfahren zum Betreiben eines virtuellen Call Centers.

Die heutzutage an sich bekannten virtuellen Call Center (VCC), auch als virtuelle Communication Center (VCC) bezeichnet, verbinden eine Vielzahl von Call-Centern mit verschiedenen Standorten durch Einbindung eines wenigstens einem Telefonnetz zugeordneten intelligenten Netzes derart, dass diese Vielzahl von Call-Centern wie ein einzelnes Center funktioniert.

Wesentliche Aufgaben des intelligenten Netzes sind hierbei insbesondere das Routen, also Leiten von Anrufen, die Gewährleistung eines gewünschten Service-Levels und die Erhebung von Statistiken. Hierdurch wird das Betreiben und in Folge die Funktion der Vielzahl von dezentralisierten Call-Centern bzw. Communication-Centern wie ein einzelnes Center ermöglicht.

Ein wesentlicher Nachteil an den derzeitigen VCC-Lösungen basiert jedoch auf der hierfür notwendigen Vernetzung der Vielzahl von Call-Centern untereinander, insbesondere über zum Teil eigene bzw. zusätzlich benötigte Datenleitungen, welches bei aktuellen VCCs teilweise zu extrem hohen Kosten führt. Ein maßgeblicher Grund hierfür liegt darin, dass für die Vernetzung der einzelnen Call-Center untereinander in jedem Call-Center eine besondere Technik erforderlich ist, welches sowohl auf Hardware-Komponenten als auch auf Software-Komponenten zutrifft.

Ist eine zusätzliche Anbindung von Heimarbeitsplätzen gewünscht, führt dies unausweichlich zu einem noch höheren technischen und materiellen Aufwand, wobei die Arbeitsmöglichkeiten von über Heimarbeitsplätze angebundenen Agenten im Vergleich zu den direkt in Call-Centern arbeitenden Agenten weiterhin häufig wesentlich eingegrenzt sind.

Erschwerend kommt ferner hinzu, dass in einer heterogenen Call-Center-Umgebung eingesetzte Hard- und/oder Software-Komponenten, wie TK-Anlagen, automatische Rufverteilungseinrichtungen (Automatic Call Distribution, ACD) und/oder Einrichtungen zur Integration Computerbasierter Telekommunikation (Computer Telephony Integration, CTI) herkömmlicherweise von verschiedenen Herstellern sind. Zur Gewährleistung der notwendigen Kompatibilität für die virtuelle Einbindung von anwendungsbasierten Agenten-Endeinrichtungen in Call-Centern wie auch über Heimarbeitsplätze wird folglich eine Vielzahl von unterschiedlichen Anpassungsmodulen benötigt.

Aus Dokument US 5,825,870 ist ein reales Call-Center bekannt, welches zentral für eine Vielzahl von Kunden bereitgestellt wird und ein physikalisches TK-System mit internen Verbindungspunkten besitzt, zu welchen Agenten eines jeweiligen Kunden verbunden sind, bis der jeweilige Agent von sich aus die Verbindung beendet.

Dokument US 5,960,073 beschreibt ebenfalls ein reales Call-Center mit einer zentralen Vermittlungsanlage, die mit einem Telekommunikationsnetz verbunden ist. Agenten des Call Centers bedienen mit der zentralen Vermittlungsanlage verbundene Telefone und Heim-Agenten können an das Call-Center angeschaltet werden,

Eine Aufgabe der Erfindung ist es somit, einen neuen und wesentlich verbesserten Weg zum Betreiben eines VCCs aufzuzeigen, mit welchem, basierend auf bestehenden Kommunikationsnetzen, die anwendungsspezifische Technik zum Betreiben eines VCCs am Ort der Agenten-Endeinrichtungen auf ein Minimum reduziert und/oder zumindest teilweise im Wesentlichen vollständig überwunden wird und vorzugsweise ein flexibles Einbinden von im Wesentlichen beliebigen Agenten-Endeinrichtungen mit Zugang zu einem Telekommunikationsnetz gewährleistet wird.

Die erfindungsgemäße Lösung der Aufgabe ist auf überraschende Weise bereits durch ein Verfahren mit den Merkmalen des Anspruchs 1, durch ein virtuelles Call-Center mit den Merkmalen des Anspruchs 17, durch einen Server mit den Merkmalen des Anspruchs 30, durch ein Computerprogrammprodukt mit den Merkmalen des Anspruchs 31, durch ein Computerprogramm mit den Merkmalen des Anspruchs 32 und/oder durch ein digitales Speichermedium mit den Merkmalen des Anspruchs 33 verwirklicht.

Vorteilhafte und/oder bevorzugte Ausführungsformen bzw. Weiterbildungen sind Gegenstand der jeweiligen Unteransprüche.

Erfindungsgemäß ist somit zum Betreiben eines Virtuellen Call Centers vorgesehen, die anwendungsspezifische VCC-Logik zentral über wenigstens ein Telekommunikationsnetz bereitzustellen. Insbesondere mittels eines zentralen, die VCC-Logik umfassenden Servers ist somit gewährleistet, dass bereits von Endeinrichtungen mit einer Schnittstelle zu dem Telekommunikationsnetz der Zugriff auf die notwendige VCC-Logik zentral über bestehende Telekommunikationsleitungen erfolgen kann. Ein Anwendungsspezifischer Ausbau von Datenleitungen und/oder eine VCC-spezifische Technik vor Ort einer jeweiligen Agenten-Endeinrichtung zum Betreiben eines VCCs ist folglich nicht mehr zwingend.

Die Erfindung schlägt vor, ein Telefonnetz mit einem intelligenten Netz (IN) bereitzustellen, mit welchem die zentrale VCC-Logik derart verbunden wird, dass unter Ansprechen auf das Aufbauen einer Verbindung von einer im Wesentlichen auswählbaren Endeinrichtung mit Zugang zu dem Telefonnetz zu der VCC-Logik zunächst eine Anmeldungsprozedur bei der zentralen VCC-Logik durchgeführt wird und ein zumindest zeitweises Einbinden der angemeldeten Endeinrichtungen als definierte VCC-Endeinrichtung in die vorgebbare VCC-Struktur erfolgt.

Ferner schlägt die Erfindung vor, dass das intelligente Netz unter Zusammenwirken mit der zentralen VCC-Logik einer zum VCC durchgeschalteten Kunden-Endeinrichtung unter Ansprechen auf kundenspezifische Steuerdaten einen geeigneten Agenten ermittelt, reserviert und einen Verbindungsaufbau zwischen der Kundeneinrichtung und der entsprechenden, dem Agenten zugeordneten VCC-Endeinrichtung bewirkt. Ein wesentlicher Vorteil hierbei ist, dass das erfindungsgemäße VCC auf einfachste Weise kurzfristig und mit allen möglichen Leistungsmerkmalen realisierbar ist. Insbesondere auch das kostengünstige Bereitstellen von zeitlich begrenzten VCCs bei minimalem technischen Aufwand ist gewährleistet.

Die Erfindung sieht somit ein VCC vor, welches Schnittstellen zum, insbesondere interaktiven Verbinden des zentralen Servers mit dem intelligenten Netz umfasst, derart, dass für eine zum VCC durchgeschaltete Kunden-Endeinrichtung unter Ansprechen auf kundenspezifische Steuerdaten ein geeigneter Agent auswählbar ist und ein gezielter Verbindungsaufbau zur Kommunikation, insbesondere zur Bild-, Daten- und/oder Sprachübertragung, zwischen der Kunden-Endeinrichtung und einer dem Agenten zugeordneten Endeinrichtung durchführbar ist. Der Server umfasst ferner Schnittstellen zum Herstellen eines Agentenzugangs zum VCC-Logik-Server derart, dass von Agenten ausgewählte Endeinrichtungen mit Schnittstellen zu einem Telekommunikationsnetz in das VCC einbindbar sind und die zentral bereitgestellte VCC-Logik von Agenten zugeordneten Endeinrichtungen nutzbar ist.

Das Erfindung stellt somit eine Art zentrale TK-Anlage mit ACD bereit, mit welcher eine äußerst flexible Einbindung von im Wesentlichen beliebigen Agenten-Endeinrichtungen ermöglicht wird. Da im Wesentlichen unmittelbar nach Einbindung ferner das gezielte Auswählen von und Leiten zu eingebunden VCC-Endeinrichtungen gewährleistet ist, wird eine wesentlich flexibleres Management eines spezifischen VCCs sichergestellt.

Mit einem solchen VCC ist folglich erstmalig, unabhängig von spezifischer Call-Center und/oder Heimarbeitsplatz-Technik, ein ortsungebundenes Einbinden einer im Wesentlichen beliebigen, einen Zugang zu einem Telekommunikationsnetz umfassenden Endeinrichtung in das VCC über den zentralen Server gewährleistet. Individuelle VCC können somit flexibel zusammengestellt und/oder Agentenarbeitsplätze zumindest zeitweise eingebunden werden, wobei die für den Agentenarbeitsplatz benötigte Technik durch Zugriff auf die zentrale VCC-Logik steuerbar bereitgestellt ist.

In besonders bevorzugter Ausbildungsform ist vorgesehen, die zentrale VCC-Logik mit dem Internet zu verbinden und den Server folglich als ein mit dem Internet verbundenen WEB-Server auszubilden. Das erfindungsgemäße VCC kann somit neben Verbindungen aus dem Telefonnetz über das intelligente Netz zusätzlich über das Internet mit Kontakten aus anderen Medien versorgt werden. Ferner ist die Zugänglichkeit zur zentralen VCC-Logik über das Internet sichergestellt. Bei Ausfall eines Telekommunikationsnetzes ist darüber hinaus das VCC weiterhin erreichbar und steuerbar und also betreibbar. Alternativ, bevorzugt jedoch zusätzlich zu dem Zugang zum Telefonnetz haben die Endeinrichtungen folglich einen Zugang zum Internet.

Um eine weitere Steigerung der Dienstflexibilität und/oder Erweiterung der Agenteneigenschaften zu ermöglichen, wird, insbesondere durch eine Gateway zwischen dem Telefonnetz und dem Internet, wenigstens eine Kommunikations- und/oder Datenverbindung zwischen dem Internet und dem Telefonnetz bereitgestellt.

In bevorzugter Weiterbildung ist vorgesehen, der zentralen VCC-Logik bzw. dem zentralen Server wenigstens eine eindeutige Kennung zuzuweisen, über welche auf einfachste Weise der standortunabhängige Zugriff, insbesondere von Endeinrichtungen zum Einbinden in das VCC und/oder zu Zwecken einer Überwachung (bzw. Monitoring), Änderung- und/oder Berichterstattung (bzw. Reporting) ermöglicht ist. Die eindeutige Kennung ist hierbei insbesondere ein einem Telefonnetz zuordenbarer Dienst und/oder eine dem Internet zuordenbare Identifikation.

In praktischer Anwendung ist ferner vorgesehen, dass in wenigstens einer dem Server zugeordneten Datenbank eine zentrale Speicherung endeinrichtungs- und/oder agentenbezogener Daten erfolgt, wobei insbesondere auch Agenten zugeordnete Berechtigungen und Skills in der der VCC-Logik zugeordneten Datenbank gespeichert werden.

Um dem intelligenten Netz den Zugriff auf diese Daten zu ermöglichen, umfasst das VCC Schnittstellenmittel zwischen der wenigstens einen Datenbank und dem intelligenten Netz, insbesondere einem Dienststeuerungsmodul des intelligenten Netzes.

Wird beim Anmelden einer Endeinrichtung eine dem anmeldenden Agenten zugeordnete Identität an die VCC-Logik übertragen, werden die gespeicherten Berechtigungen und Skills durch eine Verifizierungseinrichtung aktiviert.
Die Auswahl jeweils geeigneter, angemeldeter Agenten durch das intelligente Netz unter Zusammenwirken mit der zentralen VCC-Logik ist hierdurch auf einfache Weise umsetzbar.

Insbesondere zur Sicherstellung einer standortunabhängigen Anmeldung einer Endeinrichtung mit Mitteln für den Zugang zu einem Telekommunikationsnetz, insbesondere für den Internet-Zugang, erfolgt das Anmelden bevorzugt unter Übertragung wenigstens einer aktuellen Rufnummer und/oder Identifikationskennung der Endeinrichtung an die VCC-Logik. Eine vom Server umfasste Zuordnungseinrichtung nimmt daraufhin für das intelligente Netz das Zuordnen von einzubindenden VCC-Endeinrichtungen zu angemeldeten Agenten vor.

Um sicherzustellen, dass lediglich angemeldete Agenten hinsichtlich des Verbindungsaufbaus von Kunden-Endeinrichtungen in Betracht gezogen werden, ist ferner bevorzugt vorgesehen, unter Ansprechen auf das Abmelden einer VCC-Endeinrichtung diese Zuordnung wieder aufzuheben.

In zweckmäßiger Weise ist ferner vorgesehen, dass die zentrale VCC-Logik die gesamte applikationsspezifische Software für eine TK-Anlage, für ACD- und/oder oder CTI-Funnktionalitäten und/oder das Desktop einer Agenten-Endeinrichtung zentral bereitstellt, wodurch beispielsweise Änderungen an der Anwenderoberfläche sofort bei allen Agenten wirksam werden und alle angemeldeten bzw. eingebundenen Agenten eine einheitliche Anwenderoberfläche besitzen. Da die applikationsspezifische Software somit in dem zentralen, mit dem intelligenten Netz verbundenen Server implementiert ist, wird sichergestellt, dass das erfindungsgemäße VCC unabhängig von TK-Anlagenherstellern ist und auch Agenten an Heimarbeitsplätzen die volle ACD/CTI-Funktionalität erhalten bzw. einsetzen können und/oder Software zumindest teilweise und/oder zumindest zeitweise auch auf dezentral angeordnete VCC-Einrichtungen herunterladen können. Die in das VCC einbindbaren VCC-Endeinrichtungen weisen hierzu Mittel zum Zugreifen auf die zentrale VCC-Logik auf. Die Mittel können hierbei beispielsweise auch auf einem Desktop angezeigte Buttons umfassen.

Werden zusätzlich applikations- und/oder endeinrichtungsspezifische Kommunikationsverbindungen, insbesondere zur Bild-, Daten- und/oder Sprachübertragung zwischen VCC-Endeinrichtungen und dem VCC, insbesondere mittels des Telefonnetzes und/oder dem Internet aufgebaut, können angemeldete Agenten Anrufe von Kunden aus dem Telefonnetz bearbeiten, direkt oder durch das Gateway in IP-Telefonie, oder Anrufe von Kunden über das Internet in IP-Telefonie bearbeiten, genauso wie E-mails bearbeiten oder einen Chat durchführen und/oder den Kunden beim Ausfüllen von Formularen oder beim Surven im Internet durch Co-Browsing helfen.

In das VCC einbindbare VCC-Endeinrichtung können folglich als vollständiges Call Center, als einfaches Telefon, als PC mit oder ohne Softphone ausgebildet sein und/oder eine TK-Anlage umfassen.

Darüber hinaus ist vorgesehen, dass die Endeinrichtungen Mittel zum Übertragen von persönlichen Zustandsbeschreibungen an den Server umfassen. Hierdurch wird in bevorzugter Weise sichergestellt, alle Stati von angemeldeten Agenten und/oder VCC-Endeinrichtungen an die zentrale VCC-Logik zu übertragen. Diese abrufbaren Daten ermöglichen ferner, dass eine Online-Überwachung, also ein Online-Monitoring aktivierter Agenten und/oder der Auslastung des VCCs mittels der zentralen VCC-Logik über das Telefonnetz und/oder über das Internet durchführbar ist.

Die Erfindung ermöglicht somit eine äußerst flexible, WEB-basierende multimediale VCC-Lösung, die anwendungsspezifisch schnell erweiterungsfähig ist, da hierzu keine neue Hard- und/oder Software für den VCC-Kunden erforderlich ist. Da alle Agenten-Stati und Zustandsbeschreibungen zentral gespeichert werden, ist eine Verwaltung und/oder Online-Beobachtung durch einen Supervisor vollständig gewährleistet. Somit ist eine übergeordnete ACD-CTI-Funktionalität auf Netzebene gewährleistet, die alle Merkmale einer herkömmlichen ACD/CTI-Funktionalität ermöglicht, ohne jedoch den Einsatz zusätzlicher Technik, Wartungsarbeit oder Spezialisten im Hause, wobei die erfindungsgemäße Lösung sowohl für TK-Anlagen, als auch für Call/Communication-Center und Heimagenten herstellerunabhängig geeignet ist.

Insbesondere, um das erfindungsgemäße Verfahren mit einem Server mit einer zentralen VCC-Logik für ein virtuelles Call Center durchzuführen, schlägt die Erfindung ferner ein Computerprogrammprodukt mit auf wenigstens einem computerlesbaren Träger gespeichertem Programmcode und/oder ein Computerprogramm mit Programmcode zur Durchführung des Verfahrens vor, wenn das Programmprodukt oder das Programm in einer einen Prozessor umfassenden Servereinrichtung mit einer Verbindung zu wenigstens einem Telekommunikationsnetz eingesetzt wird bzw. abläuft und/oder ein digitales Speichermedium, insbesondere eine Diskette oder CD, mit elektronisch auslesbaren Steuersignalen, die so mit einer programmierbaren Servereinrichtung mit einer Verbindung zu wenigstens einem Telekommunikationsnetz zusammenwirken können, dass ein VCC gemäß der Erfindung betreibbar ist.

Die Erfindung wird nachfolgend anhand einer bevorzugten Ausführungsform unter Bezugnahme auf die beigefügte Zeichnung näher beschrieben. Die Zeichnung zeigt:

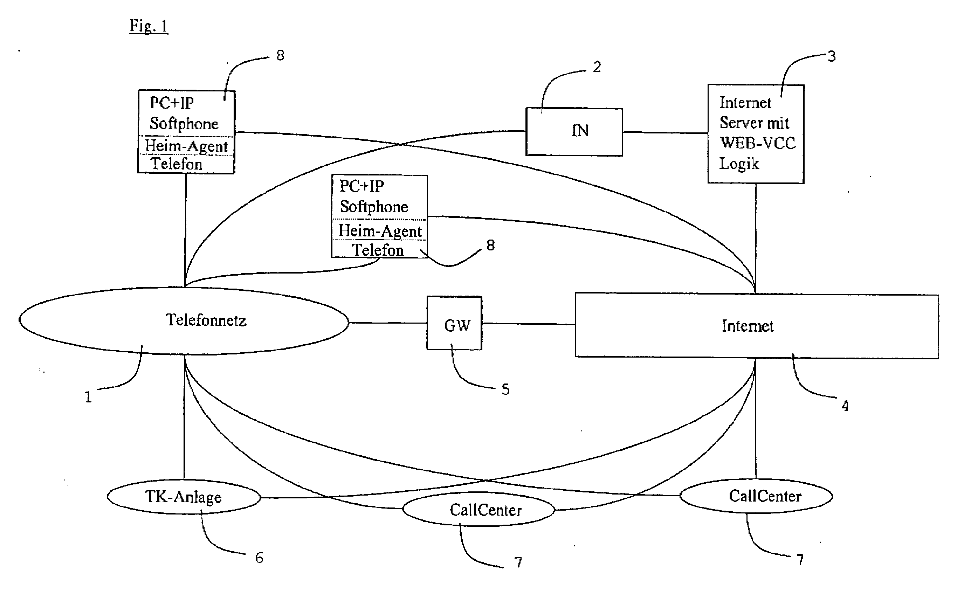

- Fig. 1: eine schematische Prinzipskizze einer bevorzugten Anordnung eines erfindungsgemäßen Virtuellen Call Centers.

Unter Bezugnahme auf Fig. 1 wird nachfolgend eine bevorzugte, jedoch beispielhafte Ausführungsform eines erfindungsgemäßen virtuellen Call Centers näher beschrieben.

Ein Telefonnetz 1, welches insbesondere ein Fest-, Mobilfunk- und/oder Satellitennetz umfasst, ist auf an sich bekannte Weise mit einem intelligenten Netz 2 verbunden. Die Funktionalität des intelligenten Netzes 2 bzw. die Bereitstellung von applikationsspezifischen IN-Diensten basiert auf der Trennung von Nutz- und Signalisierungsdaten, so dass ein Nutzer durch die Wahl einer Dienstkennzahl nicht einen bestimmten physikalischen Anschluss eines gerufenen VCC-Kunden definiert sondern den gewünschten Dienst des VCC-Kunden. Diese Dienste umfassen beispielsweise über bundesweit einheitliche Rufnummern auswählbare Sprach-, Bild-, Daten- und/oder sonstige Serviceinformationen, die vom VCC-Kunden mit Hilfe von entsprechend geschulten Agenten und/oder automatischen Informationseinrichtungen bereitgestellt werden. Das Auswählen der entsprechenden Agenten und/oder automatischen Informationseinrichtungen und das Leiten des Rufs zu den jeweils zugeordneten physikalischen Endeinrichtungen bewirkt hierbei das intelligente Netz.

Ferner ist mit dem intelligenten Netz 2 ein Internet-Server oder WEB-Server 3 verbunden, der, wie nachfolgend näher beschrieben, eine vollständige applikationsspezifische VCC-Logik zentral bereitstellt und bevorzugt die komplette ACD/CTI-Software zum Betreiben eines VCC umfasst. Dem Internet-Server 3 ist ferner ein eigener Dienst zugeordnet, der bei entsprechender Authentikation einen Zugriff auf die VCC-Logik über das Telefonnetz 1 ermöglicht.

Darüber hinaus ist dem Internet-Server 3 eine nicht näher dargestellte Datenbank zugeordnet, die sämtliche Berechtigungen und Skills von Agenten des VCC beinhaltet und verwaltet. Sind die Agenten angemeldet, werden die jeweiligen Berechtigungen und Skills aktiviert und Rufkennungen zu den Agenten zugeordneten Endeinrichtungen zu deren Auswahl und zum Leiten von Rufen für das intelligente Netz 2 bereitgehalten.

Der Zugriff vom intelligenten Netz 2 auf dem WEB-Server 3 zugeordnete Datenbanken erfolgt in zweckmäßiger Weise über angepasste Schnittstellen zu einem Dienststeuerungsmodul des intelligenten Netzes 2, welches üblicherweise bei der Ausführung von Diensten des intelligenten Netzes 2 auf dienst- und/oder dienstnutzerspezifische Daten zugreift. Die dem WEB-Server 3 zugeordnete Datenbank stellt somit eine zusätzliche Dienstdatenfunktionalität für das intelligente Netz bereit.

Der Internet-Server 3 weist ferner Schnittstellen auf, die eine Verbindung mit dem Internet 4 derart ermöglichen, dass der Server 3 über das Internet mit Kontakten aus anderen Medien versorgbar ist und grundsätzlich, insbesondere bei entsprechender Identifikation, auch über das Internet zugänglich ist. Das Telefonnetz 1 und das Internet 4 sind ferner über wenigstens ein Gateway 5 miteinander verbunden, so dass eine Daten-, Bildübertragung und zweckmäßigerweise auch Sprachübertragung, insbesondere für.IP-Telefonie, zwischen beiden Netzen sichergestellt ist.

Bei Ausfall eines Netzes, beispielsweise des Internets 4, ist das WEB-VCC weiterhin über das andere Telekommunikationsnetz, also im betrachteten Fall über das Telefonnetz 1 zu erreichen und zu steuern. Selbst wenn aufgrund des Ausfalls eines Telekommunikationsnetzes Dienste teilweise eingeschränkt sein sollten, bleibt die Basisfunktionalität erhalten.

Bei Fig. 1 sind verschiedene VCC-Endeinrichtungen dem erfindungsgemäßen VCC zugeschaltet. Diese Endeinrichtungen umfassen im einzelnen eine TK-Anlage 6, zwei Call-Center 7 und zwei Heimagenten-Arbeitsplätze 8. Alle VCC-Endeinrichtungen sind sowohl über das Telefonnetz 1 als auch über das Internet 4 dem VCC zugeschaltet, wobei auch die Einbindung nur über das Telefonnetz 1 als auch nur über das Internet 4 möglich ist. Die Endeinrichtungen umfassen somit in zweckmäßiger Weise Zugangsmittel zum Telefonnetz 1 und zum Internet 4.

Für das Zuschalten einzelner VCC-Endeinrichtungen muss zunächst eine Verbindung zu dem Server 3 aufgebaut werden. Hierzu meldet sich ein Agent oder eine Agentengruppe über ihre jeweiligen Endeinrichtungen 8 bzw. 7 über das Internet 4 mittels einer entsprechend dem Server 3 zugeordneten Identifikationskennung oder Internet-Adresse und/oder über das Telefonnetz 1 mittels einem dem Server 3 zugeordneten Dienst beim Internet-Server 3 an.

Die durch den Provider des applikationsspezifischen virtuellen Call-Communication-Centers auf dem Internet-Server 3 zur Verfügung gestellte Software führt in Folge eine Anmeldeprozedur durch, bei welcher sich der jeweilige Agent, welcher sich mit seiner VCC-Endeinrichtung dem VCC zuschalten möchte, mit einer spezifischen Agenten-Identität authentisieren muss.

Die Identifikation des Agenten und/oder seiner Einrichtung 6, 7, 8 beim VCC-Server 3 aktiviert die Berechtigungen und Skills, die für diesen Agenten gespeichert sind. Die Agenten können sich somit bei verschiedenen Agentengruppen anmelden und von Supervisoren verwaltet werden.

Um in Folge das Auswählen der derart angemeldeten Agenten und/oder automatischen Informationseinrichtungen und das Leiten von Rufen für das intelligente Netz 2 zu den jeweils zugeordneten physikalischen Endeinrichtungen zu ermöglichen, werden die aktuellen Rufkennungen und/oder Identifikationskennungen der Endeinrichtungen, mit denen sich die Agenten melden übertragen, von entsprechend angepassten Einrichtungen des WEB-Servers 3 in einer Datenbank gespeichert und den angemeldeten Agenten entsprechend zugeordnet. Diese Zuordnungen werden beim Abmelden von Agenten wieder aufgehoben.

Grundsätzlich ist somit das Einbinden von im Wesentlichen allen Endeinrichtungen mit Telekommunikationsschnittstellen von beliebigen Standorten aus gewährleistet. Folglich entsteht durch die flexible Einbindung einer ausgewählten Agenten-Endeinrichtung, beispielsweise eines klassischen Telefons mittels einer im Wesentlichen beliebigen Telekommunikationsanschlusseinheit über das Telefonnetz 1 und/oder mittels eines PC's ggfs. mit einem Softphone über das Internet 4, ein ortsunabhängiger Agentenarbeitsplatz eines virtuellen Call-Communiction-Centers.

Da sich an dem erfindungsgemäßen WEB-VCC Agenten somit im Wesentlichen mittels jeder Endeinrichtung mit Telekommunikationsschnittstelle, unabhängig vom Hersteller und vom Ort sowie ohne zusätzliche Technik mit den entsprechenden Skills melden können, ist das Einbinden jeder TK-Anlage 6, Call-Centers 7 oder Heimarbeitsplatzes 8 äußerst flexibel realisierbar. Hierdurch sind auf einfachste Weise auch kurzfristige, insbesondere auch WEB-basierende multimediale VCCs mit allen möglichen Leistungsmerkmalen gewährleistbar.

Standortunabhängig können Agenten oder VCC-Endeinrichtungen dem VCC durch einfaches Anmelden hinzugefügt, wieder abgemeldet und/oder gewechselt werden.

Die einzelnen, sich nach der Identifikation an das WEB-VCC angemeldeten Agenten können alle zur Verfügung gestellten Eigenschaften benutzen. Da das erfindungsgemäße WEB-VCC über das intelligente Netz 2 mit Verbindungen aus dem Telefonnetz 1 versorgt wird und auch Zugriff auf das Internet 4 bietet, kann der WEB-VCC-Agent je nach zugeordneter Endeinrichtung 6, 7, 8 außer den bekannten Eigenschaften eines Agenten einer herkömmlichen TK-Anlage auch verschiedene Medien wie z.B. E-mail, IP-Telefonie, Browsing, Co-Browsing und/oder Chat bearbeiten.

Die gesamte Software für die TK-Anlage 6 sowie die ACD/CTI-Funktionalitäten und zweckmäßigerweise für das Desktop einzelner Agenten-Endeinrichtung steht zentral auf dem Internet-Server 3 zur Verfügung. Alle Agenten werden zweckmäßiger Weise mit einer einheitlichen Anwenderoberfläche versorgt, so dass Änderungen an der Anwenderoberfläche sofort bei allen angemeldeten Agenten wirksam werden.

Das erfindungsgemäße WEB-basierende multimediale virtuelle Call-Center überwindet somit die bisherige Notwendigkeit, ACD/CTI-Funktionalitäten an den einzelnen Call-Center-Standorten bereitzustellen und erübrigt ferner die Kosten für ein eigenes Datennetz.

In an sich bekannter Weise ist das erfindungsgemäße WEB-VCC weiterhin von Anrufern über Servicenummern oder Netznummern, die in Servicenummern umgesetzt werden, über das Telefonnetz 1 und das intelligente Netz 2 erreichbar, so dass das intelligente Netz 2 im Zusammenwirken mit dem Internet-Server 3, also insbesondere den zugeordneten Datenbanken und über die auf dem Internet-Server 3 zentral gespeicherte Logik die bestgeeigneten Agenten ermittelt, reserviert und verbindet.

Die Agenten können folglich Anrufe aus dem Telefonnetz 1 direkt oder durch das Gateway 5 in IP-Telefonie beantworten, aber auch Anrufe über das Internet 4 direkt in IP-Telefonie bearbeiten und darüber hinaus E-mails beantworten oder Chats durchführen und Anrufern beim Ausfüllen von Formularen oder beim Surfen im Internet durch Co-Browsing helfen.

Ferner können Rückfragen und Weiterverbindungsfunktionen auf der Netzebene durch sogenanntes PostRouting im Netz wie bei herkömmlichen Anlagen realisiert werden.

Auch die Supervisor-Funktionen sowie die VCC-Überwachung, das sogenannte Monitoring, und die VCC-Berichterstattung, das sogenannte Reporting, sind über die Verbindungen sowohl über das Internet 4 als auch über das Telefonnetz 1 realisiert. Die Supervisoren und andere berechtigte Personen können somit auf Offline- und Online-Statistiken zugreifen.

Zweckmäßiger Weise werden hierzu alle Agenten-Stati, beispielsweise über Buttons des Softphones der VCC-Logik übermittelt, so dass die Agenten-Stati zentral beim Internet-Server 3 verfügbar sind, obwohl sich die einzelnen Agenten an verschiedenen Standorten befinden und beispielsweise nur über das Internet 4 mit dem erfindungsgemäßen WEB-VCC verbunden sind.

Da somit an der zentralen Stelle beim Internet-Server 3 alle Stati bekannt sind, ist ein Online-Monitoring und/oder Online-Reporting des gesamten WEB-basierenden VCCs oder über Teile hiervon jederzeit möglich.

## Patentansprüche

1. Verfahren zum Betreiben eines Virtuelles Call Center (VCC), bei welchem eine applikationsspezifische VCC-Logik (3) zentral über wenigstens ein Telekommunikationsnetz (1, 4) bereitgestellt wird,
**dadurch gekennzeichnet, dass**
ein Telefonnetz (1) mit einem zugeordneten intelligenten Netz (2) bereitgestellt wird und das intelligente Netz (2) mit der zentralen VCC-Logik (3) verbunden wird, dass von wenigstens einer auswählbaren Endeinrichtung (6, 7, 8) mit Zugang zu wenigstens einem Telekommunikationsnetz eine Verbindung zu der VCC-Logik (3) aufgebaut wird, die ausgewählte Endeinrichtung (6, 7, 8) bei der VCC-Logik (3) angemeldet wird und die angemeldete Endeinrichtung (6, 7, 8) wenigstens zeitweise als definierte VCC-Endeinrichtung in das VCC eingebunden wird und, dass das intelligente Netz (2) unter Zusammenwirken mit der zentralen VCC-Logik (3) eine mit dem VCC verbundene Kunden-Endeinrichtung unter Ansprechen auf kundenspezifische Steuerdaten einen geeigneten Agenten auswählt und einen Verbindungsaufbau zwischen der Kunden-Endeinrichtung und einer dem Agenten zugeordneten VCC-Endeinrichtung (6, 7, 8) zur Kommunikation bewirkt, insbesondere zur Bild-, Daten- und/oder Sprachübertragung.

2. Verfahren nach Anspruch 1, ferner **dadurch gekennzeichnet, dass** die zentrale VCC-Logik (3) mit dem Internet (4) verbunden wird.

3. Verfahren nach Anspruch 2, ferner **dadurch gekennzeichnet, dass** wenigstens eine Kommunikations- und/oder Datenverbindung (5) zwischen dem Internet (4) und dem Telefonnetz (1) bereitgestellt wird.

4. Verfahren nach einem der Ansprüche 1 bis 3, ferner **dadurch gekennzeichnet, dass** der zentralen VCC-Logik (3) wenigstens eine eindeutige Kennung zum Aufbauen einer Verbindung zu der VCC-Logik (3) von einer Endeinrichtung (6, 7, 8) mit einem Zugang zu einem Telefonnetz (1) und/oder dem Internet (4) zugewiesen wird.

5. Verfahren nach Anspruch 4, ferner **dadurch gekennzeichnet, dass** der VCC-Logik eine Identifikationskennung und/oder ein über ein Telefonnetz (1) zuordenbarer Dienst zugewiesen wird.

6. Verfahren nach einem der Ansprüche 1 bis 5, ferner **dadurch gekennzeichnet, dass** zum Anmelden einer Endeinrichtung (6, 7, 8) mit einem Zugang zu einem Telekommunikationsnetz wenigstens eine aktuelle Rufnummer und/oder Identifikationskennung der Endeinrichtung (6, 7, 8) an die VCC-Logik (3) übertragen und durch die VCC-Logik (3) für das intelligente Netz (2) dem Agenten zugeordnet wird.

7. Verfahren nach Anspruch 6, ferner **dadurch gekennzeichnet, dass** unter Ansprechen auf das Abmelden einer VCC-Endeinrichtung (6, 7, 8) die Zuordnung aufgehoben wird.

8. Verfahren nach einem der Ansprüche 1 bis 7, ferner **dadurch gekennzeichnet, dass** Agenten zugeordnete Berechtigungen und Skills in einer der VCC-Logik (3) zugeordneten Datenbank gespeichert werden.

9. Verfahren nach einem der Ansprüche 1 bis 8, ferner **dadurch gekennzeichnet, dass** zum Anmelden einer Endeinrichtung (6, 7, 8) eine dem anmeldenden Agenten zugeordnete Identität an die VCC-Logik (3) zum Aktivieren von dem Agenten zugeordneten und in einer der VCC-Logik (3) zugeordneten Datenbank gespeicherten Berechtigungen übertragen wird.

10. Verfahren nach einem der Ansprüche 1 bis 9, ferner **dadurch gekennzeichnet, dass** alle Stati von angemeldeten Agenten und/oder VCC-Endeinrichtungen (6, 7, 8) an die zentrale VCC-Logik (3) abrufbar übertragen werden.

11. Verfahren nach einem der Ansprüche 1 bis 10, ferner **dadurch gekennzeichnet, dass** ein Online-Monitoring und/oder Online-Reporting aktivierter Agenten und/oder der Auslastung des VCCs mittels der zentralen VCC-Logik über das Telefonnetz (1) und/oder über das Internet (4) durchgeführt wird.

12. Verfahren nach einem der Ansprüche 1 bis 11, ferner **dadurch gekennzeichnet, dass** applikations- und/oder endeinrichtungsspezifische Kommunikationsverbindungen zwischen VCC-Endeinrichtungen (6, 7, 8) und dem VCC aufgebaut werden, insbesondere zur Bild-, Daten- und/oder Sprachübertragung.

13. Verfahren nach einem der Ansprüche 1 bis 12, ferner **dadurch gekennzeichnet, dass** die applikationsspezifische Software für eine TK-Anlage, für ACD- und/oder CTI-Funktionlitäten und/oder das Desktop einer Endeinrichtung (6, 7, 8) zentral bereitstellt wird.

14. Verfahren nach Anspruch 13, ferner **dadurch gekennzeichnet, dass** applikationsspezifisch zentral bereitgestellte Software zumindest teilweise und/oder zumindest zeitweise auf dezentral angeordnete VCC-Einrichtungen (6, 7, 8) heruntergeladen wird.

15. Virtuelles Call Center umfassend
- einen Server zum zentralen Bereitstellen einer applikationsspezifischen VCC-Logik über wenigstens ein Telekommunikationsnetz (1, 4)
**gekennzeichnet durch**
- ein, einem Telefonnetz (1) zugeordnetes und mit diesem verbundenes intelligentes Netz (2),
- Schnittstellenmittel zum Verbinden des intelligenten Netzes (2) mit dem zentralen VCC-Logik-Server (3),
- Schnittstellenmittel, zum Herstellen eines Agentenzuganges zum VCC-Logik-Server (3) zum Einbinden von von Agenten ausgewählten Endeinrichtungen (6, 7, 8) mit Schnittstellen zu Telekommunikationsnetzen in das VCC und zum Nutzen der zentralen VCC-Logik von Agenten zugeordneten VCC-Endeinrichtungen (6, 7, 8) mit Zugängen zu Telekommunikationsnetzen,
wobei das intelligente Netz derart ausgestaltet ist, daß es unter Zusammenwirken mit der zentralen VCC-Logik (3) einer zum VCC durchgeschalteten Kunden-Endeinrichtung unter Ansprechen auf kundenspezifische Steuerdaten einen geeigneten Agenten auswählt und einen Verbindungsaufbau zwischen der Kunden-Endeinrichtung und einer dem Agenten zugeordneten VCC-Endeinrichtung (6, 7, 8) zur Kommunikation bewirkt, insbesondere zur Bild-, Daten- und/oder Sprachübertragung.

16. Virtuelles Call Center nach Anspruch 15, **dadurch gekennzeichnet, dass** der Server (3) als ein mit dem Internet (4) verbundener WEB-Server ausgebildet ist.

17. Virtuelles Call Center nach Anspruch 16, ferner **gekennzeichnet durch** eine Gateway (5) zwischen dem Telefonnetz (1) und dem Internet (4).

18. Virtuelles Call Center nach einem der Ansprüche 15 bis 19, **gekennzeichnet durch** VCC-Endeinrichtungen (6, 7, 8) mit Schnittstellen zu einem Telefonnetz (1) und/oder zum Internet (4).

19. Virtuelles Call Center nach einem der Ansprüche 15 bis 18, ferner **gekennzeichnet durch** wenigstens eine dem Server (3) zugeordnete Datenbank zur zentralen Speicherung endeinrichtungs- und/oder agentenbezogener Daten.

20. Virtuelles Call Center nach Anspruch 19, ferner **gekennzeichnet durch** Schnittstellenmittel zwischen der wenigstens einen dem Server (3) zugeordneten Datenbank und dem intelligenten Netz (2), insbesondere einem Dienststeuerungsmodul des intelligenten Netzes (2).

21. Virtuelles Call Center nach einem der Ansprüche 15 bis 20, ferner **dadurch gekennzeichnet, dass** der Server (3) zum Bereitstellen für in das VCC eingebundene VCC-Endeinrichtungen (6, 7, 8) applikationsspezifische Software für eine TK-Anlage und/oder applikationsspezifische ACD- und/oder CTI-Software umfasst.

22. Virtuelles Call Center nach einem der Ansprüche 15 bis 21, ferner **dadurch gekennzeichnet, dass** in das VCC einbindbare VCC-Endeinrichtungen (6, 7, 8) Mittel zum Zugreifen auf die zentrale VCC-Logik aufweisen.

23. Virtuelles Call Center nach einem der Ansprüche 15 bis 22, ferner **dadurch gekennzeichnet, dass** eine in das VCC einbindbare VCC-Endeinrichtung (6, 7, 8) ein Call Center (7), ein Telefon, einen PC, einen PC mit Softphone (8) und/oder eine TK-Anlage (6) umfasst.

24. Virtuelles Call Center nach einem der Ansprüche 15 bis 23, ferner **dadurch gekennzeichnet, dass** in das VCC einbindbare VCC-Endeinrichtungen (6, 7, 8) Mittel zum Übertragen von persönlichen Zustandbeschreibungen an den Server (3) umfassen.

25. Virtuelles Call Center nach einem der Ansprüche 15 bis 24, ferner **dadurch gekennzeichnet, dass** dem Server (3) eine eindeutige Identifikationskennung, Internet-Adresse und/oder ein über ein Telefonnetz (1) zuordenbarer Dienst zugewiesen ist.

26. Virtuelles Call Center nach einem der Ansprüche 15 bis 25, ferner **gekennzeichnet durch** eine Einrichtung zum Verifizieren von Agenten und/oder zum Zuordnen von einzubindenden VCC-Endeinrichtungen (6, 7, 8) zu angemeldeten Agenten.

27. Server mit einer zentralen VCC-Logik für ein virtuelles Call Center nach einem der Ansprüche 15 bis 26, insbesondere zum Durchführen eines Verfahrens nach einem der Ansprüche 1 bis 14.

28. Computerprogrammprodukt mit auf wenigstens einem computerlesbaren Träger gespeichertem Programmcode zur Durchführung des Verfahrens nach einem der Ansprüche 1 bis 14, wenn das Programmprodukt in einer einen Prozessor umfassenden Servereinrichtung mit einer Verbindung zu wenigstens einem Telekommunikationsnetz (1, 4) eingesetzt wird.

29. Digitales Speichermedium mit elektronisch auslesbaren Steuersignalen zum Bereitstellen unter Zusammenwirkung einer programmierbaren Servereinrichtung mit einer Verbindung zu wenigstens einem Telekommunikationsnetz (1, 4) einer zentralen VCC-Logik zum Betreiben eines virtuellen Call Centers nach einem der Ansprüche 15 bis 26.

## Claims

1. Method for operating a virtual call center (VCC) in which an application-specific VCC logic (3) is centrally provided over at least one telecommunications network (1, 4),
**characterized in that**
a telephone network (1) with an associated intelligent network (2) is provided and the intelligent network (2) is connected to the central VCC logic (3), **in that** a connection to the VCC logic (3) is established from at least one selectable terminal device (6, 7, 8) with access to at least one telecommunications network, the selected terminal device (6, 7, 8) is logged on to the VCC logic (3), and the logged-on terminal device (6, 7, 8) is incorporated, at least part of the time, into the VCC logic (3) as a defined VCC terminal device, and **in that** the intelligent network (2), working together with the central VCC logic (3) in response to customer-specific control data, selects a suitable agent for a customer terminal device connected to the VCC and establishes a connection for communication, in particular for voice, data and/or image transmission, between the customer terminal device and a VCC terminal device (6, 7, 8) associated with the agent.

2. Method according to claim 1, further **characterized in that** the central VCC logic (3) is connected to the Internet (4).

3. Method according to claim 2, further **characterized in that** at least one communication connection and/or data connection (5) is provided between the Internet (4) and the telephone network (1).

4. Method according to any one of claims 1 through 3, further **characterized in that** the central VCC logic (3) is assigned at least one unique designator for establishing a connection to the VCC logic (3) from a terminal device (6, 7, 8) having access to a telephone network (1) and/or the Internet (4).

5. Method according to claim 4, further **characterized in that** the VCC logic is assigned an identifying designator and/or a service capable of association through a telephone network (1).

6. Method according to any one of claims 1 through 5, **further characterized in that**, in order to log on a terminal device (6, 7, 8) having access to a telephone network, at least one current subscriber number and/or identifying designator of the terminal device is transmitted to the VCC logic (3) and is associated with the agent by the VCC logic (3) for the intelligent network (2).

7. Method according to claim 6, further **characterized in that** the association is terminated in response to the logging off of a VCC terminal device (6, 7, 8).

8. Method according to any one of claims 1 through 7, **further characterized in that** privileges and skills associated with agents are stored in a database associated with the VCC logic (3).

9. Method according to any one of claims 1 through 8, further **characterized in that**, in order to log on a terminal device (6, 7, 8), an identity associated with the agent logging on is transmitted to the VCC logic (3) to activate privileges that are associated with the agent and that are stored in a database associated with the VCC logic (3).

10. Method according to any one of claims 1 through 9, further **characterized in that** all status information of logged-on agents and/or VCC terminal devices (6, 7, 8) is retrievably transmitted to the central VCC logic (3).

11. Method according to any one of claims 1 through 11, further **characterized in that** online monitoring and/or online reporting of activated agents and/or the utilization of the VCC is performed by the central VCC logic through the telephone network (1) and/or the Internet (4).

12. Method according to one of claims 1 through 11, further **characterized in that** application-specific and/or terminal-device-specific communication connections are established between the VCC terminal devices (6, 7, 8) and the VCC, in particular for image, data and/or voice transmission.

13. Method according to one of claims 1 through 12, further **characterized in that** the application-specific software for a telecommunications system, for ACD and/or CTI functionalities, and/or the desktop of a terminal device (6, 7, 8) is provided centrally.

14. Method according to claim 13, further **characterized in that** centrally-provided application-specific software is downloaded to decentrally located VCC terminal devices (6, 7, 8) at least in part or at least part of the time.

15. Virtual call center comprising
- a server for centrally providing an application-specific VCC logic through at least one telecommunications network (1, 4),
**characterized by**
- an intelligent network (2) associated with a telephone network (1) and connected thereto,
- interface means for connecting the intelligent network (2) to the central VCC logic server (3),
- interface means for establishing agent access to the VCC logic server (3) in order that terminal devices (6, 7, 8) selected by agents and having interfaces to telecommunications networks may be incorporated into the VCC, and for using the central VCC logic from VCC terminal devices (6, 7, 8) associated with agents and having access to telecommunications networks, wherein the intelligent network is designed such that it works together with the central VCC logic (3) in response to customer-specific control data to select a suitable agent for a customer terminal device switched through to the VCC and establish a connection for communication, in particular for image, data and/or voice transmission, between the customer terminal device and a VCC terminal device (6, 7, 8) associated with the agent.

16. Virtual call center according to claim 15, **characterized in that** the server (3) is embodied as a Web server connected to the Internet (4).

17. Virtual call center according to claim 16, further **characterized by** a gateway (5) between the telephone network (1) and the Internet (4).

18. Virtual call center according to any one of claims 15 through 19, **characterized by** VCC terminal devices (6, 7, 8) having interfaces to a telephone network (1) and/or the Internet (4).

19. Virtual call center according to any one of claims 15 through 18, further **characterized by** at least one database associated with the server (3) for central storage of data specific to a terminal device and/or agent.

20. Virtual call center according to claim 19, **further characterized by** interface means between the at least one database associated with the server (3) and the intelligent network (2), in particular a service control module of the intelligent network (2).

21. Virtual call center according to any one of claims 15 through 20, further **characterized in that** the server (3) for providing the VCC terminal devices (6, 7, 8) incorporated into the VCC includes application-specific software for a telecommunications system and/or application-specific ACD software and/or CTI software.

22. Virtual call center according to any one of claims 15 through 21, further **characterized in that** VCC terminal devices (6, 7, 8) capable of being incorporated into the VCC have means for accessing the central VCC logic.

23. Virtual call center according to any one of claims 15 through 22, further **characterized in that** a VCC terminal device (6, 7, 8) capable of being incorporated into the VCC includes a call center (7), a telephone, a PC, a PC with soft phone (8) and/or a telecommunications system (6).

24. Virtual call center according to any one of claims 15 through 23, further **characterized in that** VCC terminal devices (6, 7, 8) capable of being incorporated into the VCC include means for transmitting personal status descriptions to the server (3).

25. Virtual call center according to any one of claims 15 through 24, further **characterized in that** the server (3) is assigned a unique identifying designator, Internet address, and/or a service that can be associated through a telephone network (1).

26. Virtual call center according to any one of claims 15 through 25, further **characterized by** a device for verifying agents and/or for associating VCC terminal devices (6, 7, 8) requiring incorporation with logged-on agents.

27. Server with a central VCC logic for a virtual call center according to any one of claims 15 through 26, in particular for carrying out a method according to any one of claims 1 through 14.

28. Computer program product with program code stored on at least one computer-readable data carrier for carrying out the method according to any one of claims 1 through 14 when the program product is placed in a server device that includes a processor and that has a connection to at least one telecommunications network (1,4).

29. Digital storage medium with electronically readable control signals for providing, in cooperation with a programmable server device having a connection to at least one telecommunications network (1, 4), a central VCC logic to operate a virtual call center according to any one of claims 15 through 26.

## Revendications

1. Procédé d'exploitation d'un centre d'appel virtuel (VCC), dans lequel une logique VCC (3) spécifique à l'application est fournie de manière centralisée par l'intermédiaire d'au moins un réseau de télécommunications (1, 4),
**caractérisé en ce qu'**un réseau téléphonique (1) doté d'un réseau intelligent associé (2) est fourni, ledit réseau intelligent (2) étant relié à la logique VCC (3) centralisée, une liaison vers la logique VCC (3) est établie par au moins un équipement terminal (6, 7, 8) sélectionnable, doté d'un accès à au moins un réseau de télécommunications, l'équipement terminal (6, 7, 8) sélectionné étant connecté à la logique VCC (3) et l'équipement terminal (6, 7, 8) connecté étant intégré, au moins temporairement, au VCC comme un équipement terminal VCC défini, le réseau intelligent (2) sélectionne, en coopération avec la logique VCC (3) centralisée d'un équipement terminal d'abonné relié au VCC, un agent approprié en répondant à des données de commande spécifiques à l'abonné, et provoque l'établissement d'une liaison de communication, notamment pour effectuer la transmission d'images, de données et/ou de la parole entre l'équipement terminal d'abonné et un équipement terminal VCC (6, 7, 8) associé à l'agent.

2. Procédé selon la revendication 1, **caractérisé en outre en ce que** la logique VCC (3) centralisée est reliée à l'internet (4).

3. Procédé selon la revendication 2, **caractérisé en outre en ce qu'**au moins une liaison de communication et/ou de données (5) entre l'internet (4) et le réseau téléphonique (1) est fournie.

4. Procédé selon l'une des revendications 1 à 3, **caractérisé en outre en ce qu'**au moins un identifiant univoque est affecté à la logique VCC centralisée (3) pour l'établissement d'une liaison vers la logique VCC (3) d'un équipement terminal (6, 7, 8) doté d'un accès à un réseau téléphonique (1) et/ou à l'internet (4).

5. Procédé selon la revendication 4, **caractérisé en outre en ce qu'**un code d'identification et/ou un service pouvant être attribué par l'intermédiaire d'un réseau téléphonique (1) est affecté à la logique VCC.

6. Procédé selon l'une des revendications 1 à 5, **caractérisé en outre en ce que**, pour la connexion d'un équipement terminal (6, 7, 8) doté d'un accès à un réseau de télécommunications, au moins un numéro d'appel actuel et/ou code d'identification de l'équipement terminal (6, 7, 8) est transmis à la logique VCC (3) et attribué à l'agent par la logique VCC (3) pour le réseau intelligent (2).

7. Procédé selon la revendication 6, **caractérisé en outre en ce que** la réponse à la déconnexion d'un équipement terminal VCC (6, 7, 8) entraîne l'annulation de l'attribution.

8. Procédé selon l'une des revendications 1 à 7, **caractérisé en outre en ce que** des autorisations et skills attribués à des agents sont enregistrés dans une base de données associée à la logique VCC (3).

9. Procédé selon l'une des revendications 1 à 8, **caractérisé en outre en ce que**, pour la connexion d'un équipement terminal (6, 7, 8), une identité attribuée à l'agent qui se connecte est transmise à la logique VCC (3) pour l'activation d'autorisations attribuées à l'agent et enregistrées dans une base de données associée à la logique VCC (3).

10. Procédé selon l'une des revendications 1 à 9, **caractérisé en outre en ce que** tous les états d'agents et/ou d'équipements terminaux VCC (6, 7, 8) connectés sont transmis à la logique VCC centralisée (3) et y sont disponibles.

11. Procédé selon l'une des revendications 1 à 10, **caractérisé en outre en ce qu'**un monitoring en ligne et/ou reporting en ligne d'agents activés et/ou de l'utilisation du VCC est réalisé au moyen de la logique VCC centralisée par l'intermédiaire du réseau téléphonique (1) et/ou de l'internet (4).

12. Procédé selon l'une des revendications 1 à 11, **caractérisé en outre en ce que** des liaisons de communication spécifiques à l'application et/ou à l'équipement terminal sont établies entre des équipements terminaux VCC (6, 7, 8) et le VCC, notamment pour effectuer la transmission d'images, de données et/ou de la parole.

13. Procédé selon l'une des revendications 1 à 12, **caractérisé en outre en ce que** le logiciel spécifique à l'application est fourni de manière centralisée pour une installation PABX, pour des fonctionnalités ACD et/ou CTI et/ou le bureau d'un équipement terminal (6, 7, 8).

14. Procédé selon la revendication 13, **caractérisé en outre en ce qu'**un logiciel spécifique à l'application, fourni de manière centralisée, est téléchargé au moins partiellement et/ou au moins temporairement sur des équipements VCC (6, 7, 8) disposés de manière décentralisée.

15. Centre d'appel virtuel comprenant
- un serveur pour la fourniture centralisée d'une logique VCC spécifique à l'application par l'intermédiaire d'au moins un réseau de télécommunications (1, 4),
**caractérisé par**
- un réseau intelligent (2) associé à un réseau téléphonique (1) et relié à celui-ci,
- des moyens d'interface pour relier le réseau intelligent (2) au serveur de logique VCC centralisée (3),
- des moyens d'interface pour établir un accès d'agent au serveur de logique VCC (3) pour l'intégration d'équipements terminaux (6, 7, 8) sélectionnés par les agents et dotés d'interfaces vers des réseaux de télécommunications, et pour l'utilisation de la logique VCC centralisée par des équipements terminaux (6, 7, 8) associés à des agents et dotés d'accès à des réseaux de télécommunications au VCC, le réseau intelligent étant configuré de manière à sélectionner, en coopération avec la logique VCC centralisée (3) d'un équipement terminal d'abonné connecté au VCC, un agent approprié en répondant à des données de commande spécifiques à l'abonné, et à provoquer l'établissement d'une liaison pour la communication, notamment pour effectuer la transmission d'images, de données et/ou de la parole, entre l'équipement terminal d'abonné et un équipement terminal VCC (6, 7, 8) associé à l'agent.

16. Centre d'appel virtuel selon la revendication 15, **caractérisé en ce que** le serveur (3) est réalisé sous la forme d'un serveur web relié à l'internet (4).

17. Centre d'appel virtuel selon la revendication 16, en outre **caractérisé par** une passerelle (5) entre le réseau téléphonique (1) et l'internet (4).

18. Centre d'appel virtuel selon l'une des revendications 15 à 19, **caractérisé par** des équipements terminaux VCC (6, 7, 8) dotés d'interfaces vers un réseau téléphonique (1) et/ou l'internet (4).

19. Centre d'appel virtuel selon l'une des revendications 15 à 18, en outre **caractérisé par** au moins une base de données associée au serveur (3) pour l'enregistrement centralisé de données relatives aux équipements terminaux et/ou aux agents.

20. Centre d'appel virtuel selon la revendication 19, en outre **caractérisé par** des moyens d'interface entre au moins une base de données associée au serveur (3) et le réseau intelligent (2), notamment un module de commande de service du réseau intelligent (2).

21. Centre d'appel virtuel selon l'une des revendications 15 à 20, **caractérisé en outre en ce que**, pour la fourniture d'équipements terminaux VCC (6, 7, 8) intégrés au VCC, le serveur (3) comprend un logiciel spécifique à l'application pour une installation PABX et/ou un logiciel ACD et/ou CTI spécifique à l'application.

22. Centre d'appel virtuel selon l'une des revendications 15 à 21, **caractérisé en outre en ce que** des équipements terminaux VCC (6, 7, 8) pouvant être intégrés au VCC comprennent des moyens d'accès à la logique VCC centralisée.

23. Centre d'appel virtuel selon l'une des revendications 15 à 22, **caractérisé en outre en ce qu'**un équipement terminal VCC (6, 7, 8) pouvant être intégré au VCC comprend un centre d'appel (7), un téléphone, un PC, un PC avec softphone (8) et/ou une installation PABX (6).

24. Centre d'appel virtuel selon l'une des revendications 15 à 23, **caractérisé en outre en ce que** des équipements terminaux VCC (6, 7, 8) pouvant être intégrés au VCC comprennent des moyens de transmission de descriptions d'état personnelles au serveur (3).

25. Centre d'appel virtuel selon l'une des revendications 15 à 24, **caractérisé en outre en ce qu'**un code d'identification univoque, une adresse internet et/ou un service pouvant être attribué par l'intermédiaire d'un réseau téléphonique (1) sont affectés au serveur (3).

26. Centre d'appel virtuel selon l'une des revendications 15 à 25, en outre **caractérisé par** un équipement pour vérifier des agents et/ou pour attribuer à des agents connectés des équipements terminaux VCC (6, 7, 8) à intégrer.

27. Serveur doté d'une logique VCC centralisée pour un centre d'appel virtuel selon l'une des revendications 15 à 26, notamment pour la mise en oeuvre d'un procédé selon l'une des revendications 1 à 14.

28. Produit de programme d'ordinateur doté d'un code programme enregistré sur au moins un support lisible par ordinateur pour la mise en oeuvre du procédé selon l'une des revendications 1 à 14, lorsque le produit de programme est utilisé dans un équipement de serveur comprenant un processeur et doté d'une liaison avec au moins un réseau de télécommunications (1, 4).

29. Support de mémoire numérique doté de signaux de commande lisibles électroniquement pour la fourniture, en coopération avec un équipement de serveur programmable doté d'une liaison avec au moins un réseau de télécommunications (1, 4), d'une logique VCC centralisée pour le fonctionnement d'un centre d'appel virtuel selon l'une des revendications 15 à 26.
